# EUROPÄISCHE PATENTSCHRIFT

(11) **EP 4 030 088 B1**
(45) Veröffentlichungstag und Bekanntmachung des Hinweises auf die Patenterteilung: **04.09.2024**
(21) Anmeldenummer: 22151410.2
(22) Anmeldetag: 13.01.2022
(51) Int. Cl.: F16L 19/02, F16L 29/02, F16L 37/56

(54) **KUPPLUNG BESTIMMT FÜR EINEN DRUCKLUFTMOTOR**
CLUTCH FOR A COMPRESSED AIR MOTOR
ACCOUPLEMENT DESTINÉ À UN MOTEUR PNEUMATIQUE

(30) Priorität: 15.01.2021 DE 202021100170 U; 28.12.2021 DE 102021006376
(43) Veröffentlichungstag der Anmeldung: 20.07.2022
(73) Patentinhaber: AIR-tec-Vogel GmbH, 35460 Staufenberg (DE); FREUND Maschinenfabrik GmbH & Co. KG, 33100 Paderborn (DE)
(72) Erfinder: VOGEL, Jörg, 35460 Staufenberg (DE); SCHEER, Christian, 37697 Lauenförde (DE)
(74) Vertreter: Stoffregen, Hans-Herbert

(56) Entgegenhaltungen:
- DE-A1- 2 443 249
- DE-U- 6 809 307
- US-A- 2 628 850
- US-A1- 2020 132 233
- US-B2- 9 528 650

## Beschreibung

Die Erfindung bezieht sich auf eine Kupplung zum Verbinden einer Druckluftquelle mit einem Druckluftmotor, umfassend ein Gehäuse mit einem zu einem Druckluftanschluss führenden Gehäusekanal, einen axial in dem Gehäusekanal verstellbaren von einem Federelement kraftbeaufschlagten Kolben mit einem axial verlaufenden Kolbenkanal, wobei die Kupplung ausgebildet ist, um bei mit dem Druckluftmotor verbundener Kupplung in einen zu dem Druckluftmotor führenden Verbindungskanal überzugehen, wobei der Kolben entgegen der Kraftbeaufschlagung durch das Federelement in Richtung des Druckluftanschlusses mittels eines Zapfelements des Druckluftmotors verstellbar ist, wobei bei fehlendem Wechselwirken zwischen dem Zapfenelement und dem Kolben sich der Kolben in einer ersten Stellung durch die Kraftbeaufschlagung durch das Federelement befindet, in der der Gehäusekanal gegenüber dem Kolbenkanal über eine zwischen dem Kolben und dem Gehäusekanal verlaufende erste Dichtung durch Anliegen der ersten Dichtung an einer Anlagefläche in dem Gehäusekanal abgesperrt ist, und wobei die Kupplung des Weiteren derart ausgebildet ist, dass bei mit dem Druckluftmotor verbundener Kupplung in einer zweiten Stellung des Kolbens eine Druckluftverbindung zwischen dem Gehäusekanal, dem Kolbenkanal und dem Verbindungskanal besteht, wobei das Federelement zwischen dem Druckluftanschluss und druckluftanschlussseitigem Bereich des Kolbens verläuft, wobei von dem druckluftanschlussseitigen Bereich des Kolbenkanals radial verlaufende Öffnungen ausgehen, über die in der zweiten Stellung des Kolbens die Druckluft strömt, und wobei in der Wandung des Gehäuses zumindest ein Abluftkanal verläuft, der die Wandung in ihrem druckluftanschlussseitigen Bereich durchsetzt, wobei die Kupplung derart ausgebildet ist, dass der Abluftkanal mit dem Druckluftmotor verbindbar ist, wobei der Kolben mittels des den Verbindungskanal aufweisenden Zapfenelements des Druckluftmotors verstellbar ist, der Gehäusekanal in seiner Innenseite eine parallel zu der ersten Dichtung verlaufende umlaufende zweite Dichtung aufweist, über die das Zapfenelement gegenüber dem Gehäusekanal abdichtbar ist.

Druckluftmotoren werden z.B. zum Antrieb von Werkzeugen eingesetzt. Bestehen diese aus rostfreiem Stahl, so ist insbesondere eine Eignung in der Nahrungsmittel- und chemischen Industrie gegeben, da diese hygienischen Anforderungen genügen und zuverlässig arbeiten. Zum Reinigen, wie z.B. Desinfizieren, des Gehäuses entsprechender Druckluftmotoren muss die Verbindung zur Druckluftquelle entfernt werden. Dies ist häufig zeitaufwendig. Gleiches gilt für den Fall, wenn eine Druckluftzuführung für mehrere Druckluftmotoren benutzt werden soll.

Der DE 1 756 105 U1 ist ein konstruktiv aufwendiges Selbstschlussventil für Druckluftleitungen zu entnehmen, das einen kugelförmigen Ventilkörper mit konusförmigem Ansatz aufweist, wobei zwischen dem Ansatz und dem Körper eine Dichtung verläuft. Der Ventilkörper ist mit einer Hülse verbunden. Auf die Hülse wirkt ein Federelement, das sich zwischen einem Gehäuseteil und einer von der Hülse ausgehenden Schulter abstützt. Die Führung der Hülse erfolgt über zusammensetzbare Abschnitte von Gehäuseteilen.

Die DE 68 09 307 U1 sieht eine an einer Wandung oder einer Decke befestigte Druckluftkupplung vor, die über einen Schlauch mit einem Druckluftwerkzeug unter Verwendung eines Bajonettverschlusses verbunden wird, mittels dessen ein Druckluftkanal freigegeben wird.

Der US 2020/0132233 A1 ist eine Stecker-Schlauch-Verbindung zu entnehmen, um eine Nagelpistole betreiben zu können.

Um einen Schlauch mit einem Ventil zu verbinden, wird nach der US 2,628,850 A eine Kupplung vorgeschlagen, die dann ein Fluid absperrt, wenn die Kupplung von dem Ventil gelöst ist.

Eine Steckkupplung für Druckluftleitungen wird in der DE 24 43 249 A1 beschrieben.

Der US 9,528,650 B2 ist eine Schnellkupplung für unter hohem Druck strömende Fluide, wie Wasserstoff, zu entnehmen.

Der vorliegenden Erfindung liegt die Aufgabe zugrunde, eine Kupplung für einen Druckluftmotor zur Verfügung zu stellen, die sowohl ein schnelles Lösen als auch ein Verbinden mit einer Druckluftquelle ermöglicht, ohne dass sich Nachteile beim Zuführen der Druckluft ergeben. Dabei soll die Kupplung im gewünschten Umfang zu einem Druckluftmotor ausrichtbar, also die Kupplung ortsveränderlich positionierbar sein.

Nach einem weiteren Aspekt soll die Möglichkeit gegeben sein, die Abluft gezielt wegzuführen.

Auch soll die Möglichkeit eröffnet sein, eine Reduzierung des Schallpegels zu erreichen, der bei Druckluftmotoren recht hoch ist.

Zur Lösung der Aufgabe sieht die Erfindung im Wesentlichen vor, dass ein Abstand zwischen dem Kontaktbereich der ersten Dichtung auf der Anlagefläche zu der zweiten Dichtung derart festgelegt ist, dass beim Anliegen der ersten Dichtung an der Anlagefläche eine Stoßfläche zwischen dem Kolben und dem Zapfenelement zwischen der Anlagefläche und der zweiten Dichtung verläuft.

Insbesondere zeichnet sich die Erfindung dadurch aus, dass der Kolben einen druckluftmotorseitig verlaufenden ersten Abschnitt und einen druckluftanschlussseitig verlaufenden zweiten Abschnitt aufweist, dass der erste Abschnitt außenseitig eine Zylindergeometrie aufweist und innerhalb von diesem der Kolbenkanal verläuft, dass der zweite Abschnitt im Vergleich zu dem ersten Abschnitt einen größeren Querschnitt aufweist und beabstandet zur Innenfläche des Gehäusekanals verläuft, dass das Federelement zum einen druckluftranschlussseitig, vorzugsweise an dem Druckluftanschluss, und zum anderen an dem zweiten Abschnitt abgestützt ist, dass im zweiten Abschnitt oder im Übergangsbereich zwischen dem ersten und dem zweiten Abschnitt eine erste Dichtung verläuft, dass der Gehäusekanal eine Anlagefläche aufweist, dass die erste Dichtung bei fehlendem Wechselwirken zwischen dem Zapfenelement und dem Kolben an der Anlagefläche anliegt, und dass der Kolbenkanal in seinem druckluftanschlussseitigen Bereich radial verlaufende Öffnungen aufweist, die derart in Bezug auf die Anlagefläche verlaufen, dass bei fehlendem Anliegen der Dichtung an der Anlagefläche eine Verbindung zwischen dem Gehäusekanal und dem Kolbenkanal besteht, und beim Anliegen der Dichtung an der Anlagefläche die Verbindung gesperrt ist.

Erfindungsgemäß wird eine Kupplung vorgeschlagen, die mit einem Druckluftmotor verbindbar ist, wobei das Gehäuse der Kupplung einen Druckluftanschluss aufweist und innerhalb des Gehäuses ein Kolben verstellbar ist, der in einer ersten Stellung, in der das Gehäuse, also die Kupplung von dem Motoranschluss gelöst ist, in dem Gehäuse anstehende Druckluft absperrt, und in einer zweiten Stellung, in der eine Verbindung zu dem Druckluftmotor besteht, die Druckluft zu dem Druckluftmotor strömen kann.

Dabei ist insbesondere vorgesehen, dass das Gehäuse zumindest eine, vorzugsweise zwei in Längsachsenrichtung verlaufende Verbindungen, wie Kanäle oder Bohrungen in der Gehäusewandung, aufweist, über die von dem Druckluftmotor stammende Abluft weggeführt wird. Bevorzugterweise erfolgt das Wegführen über einen Schlauch, der z.B. eine Länge von mehr als zwei, vorzugsweise von mehr als drei Meter aufweist, mit einem Schalldämpfer verbunden ist, um eine Geräuschreduzierung zu erzielen. Hierdurch ergibt sich der Vorteil, dass die von dem Druckluftmotor stammende Abluft nicht unmittelbar im Bereich des Druckluftmotors ausströmt, wodurch eine unerwünschte Geräuschbildung auftreten würde.

Um wahlweise die Druckluft abzusperren oder diese mit dem Druckluftmotor zu verbinden, liegt die insbesondere von dem Kolben ausgehende erste Dichtung entweder an einer in der Innenfläche des Gehäuses ausgebildeten Anlagefläche an oder ist zu dieser beabstandet. In diesem Bereich verläuft der Kolben beabstandet zur Innenfläche des Gehäuses, quasi ein Ringraum wird ausgebildet, um im erforderlichen Umfang Druckluft strömen zu lassen.

Dadurch, dass das Federelement auf den druckluftanschlussseitigen Stirnbereich des Kolbens einwirkt, ergibt sich eine einfache Konstruktion, insbesondere ein einfaches Einsetzen und Austauschen des Federelements. Das Gehäuse muss nicht auseinandergenommen werden. Vielmehr ist es nur erforderlich, den Luftdruckanschluss von dem Gehäuse zu lösen.

Insbesondere ist vorgesehen, dass die Anlagefläche eine Konusform, also die Geometrie eines Kegels aufweist.

Ferner ist besonders hervorzuheben, dass der Kolben aus einem druckluftmotorseitig verlaufenden ersten Abschnitt mit einer Zylindergeometrie und einem druckluftanschlussseitig verlaufenden zweiten Abschnitt besteht, der gegenüber dem ersten Abschnitt erweitert ist, also einen wirksamen Querschnitt aufweist, der größer als der des ersten Abschnitts ist.

Die erste Dichtung kann von dem zweiten Abschnitt ausgehen. Insbesondere ist jedoch vorgesehen, dass die erste Dichtung im Übergangsbereich zwischen dem ersten und dem zweiten Abschnitt verläuft, insbesondere in einer Nut, über die der erste Abschnitt in den zweiten Abschnitt übergeht.

Hervorzuheben ist des Weiteren, dass der zweite Abschnitt im Längsschnitt vorzugsweise eine T-Geometrie mit einem Querschenkel aufweist, an dessen druckluftanschlussseitiger Fläche das Federelement mit einer seiner Enden abgestützt ist. Das andere Ende des Federelementes, bei dem es sich insbesondere um eine Schraubenfeder handelt, sollte an der Innenfläche des mit dem Gehäuse verbundenen Druckluftanschlusses abgestützt sein.

Zur sicheren Fixierung des Federelementes umgibt dieses den Längsschenkel des zweiten Abschnitts des Kolbens, der erwähntermaßen bevorzugterweise im Längsschnitt eine T-Geometrie aufweist.

Um auszuschließen, dass Druckluft zwischen Zapfenelement und Kupplung bzw. deren Innenseite entweichen kann, sieht die Erfindung vor, dass parallel zur ersten Dichtung in der Innenfläche des Gehäuses die zweite Dichtung verläuft, über die das Zapfenelement gegenüber dem Gehäuse abdichtbar ist, wobei der Abstand der Anlagefläche für die erste Dichtung, und zwar in dem Bereich, auf dem die erste Dichtung bei sperrender Kupplung aufliegt, zu der zweiten Dichtung derart festgelegt ist, dass beim Anliegen der ersten Dichtung an der Anlagefläche die Stoßfläche zwischen dem Kolben und dem Zapfenelement zwischen der Anlagefläche, d.h. dem Kontaktbereich der ersten Dichtung auf der Anlagefläche, und der zweiten Dichtung verläuft. Somit ist sichergestellt, dass bei geöffneter Kupplung, also dann, wenn mittels des Zapfenelementes der Kolben entgegen der von dem Federelement hervorgerufenen Kraft in Richtung des Druckluftanschlusses verstellt wird, um die erste Dichtung zu der Anlagefläche zu beabstanden, Falschluft nicht austreten kann. Die Abdichtung der zweiten Dichtung wirkt stets, bis die erste Dichtung die gewünschte Dichtwirkung zeigt. In dieser Position des Kolbens kann Druckluft nicht mehr über die radial verlaufenden Öffnungen und den Kolbenkanal strömen.

Des Weiteren ist eine dritte Dichtung vorgesehen, über die eine Abdichtung zwischen der Gehäuseaußenfläche und dem Abschnitt des Druckluftmotors erfolgt, der die Kupplung aufnimmt.

Erwähntermaßen zeichnet sich die Erfindung insbesondere auch dadurch aus, dass in dem Gehäuse, d.h. dessen Wandung, zumindest eine Abluftverbindung zu einer Abluftöffnung des Druckluftmotors verläuft. Diese zumindest eine Abluftverbindung mündet in einem ersten Schlauch, der mit dem Gehäuse der Kupplung verbunden ist. Innerhalb des ersten Schlauchs verläuft ein zu dem Druckluftanschluss führender zweiter Schlauch.

Gegenstand der Erfindung ist auch ein Druckluftmotor mit einer Kupplung, mit einem oder mehreren der zuvor erläuterten Merkmalen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:
- Fig. 1: eine erste Ausführungsform einer auf einen Druckluftmotor aufgeschraubten Schnellkupplung,
- Fig. 2: die Schnellkupplung nach Fig. 1,
- Fig. 3: eine zweite Ausführungsform einer ortsveränderbar positionierbaren Kupplung verbunden mit einem Druckluftmotor und
- Fig. 4: die Kupplung gemäß Fig. 3 mit beabstandetem Druckluftmotor.

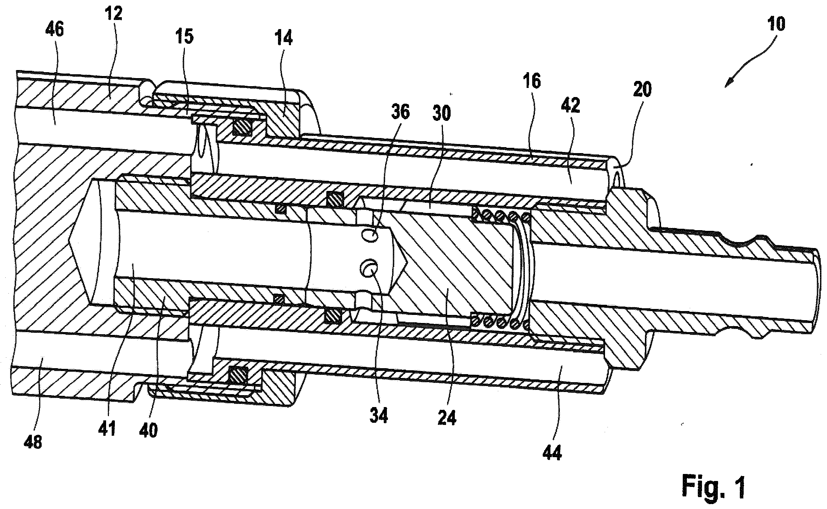

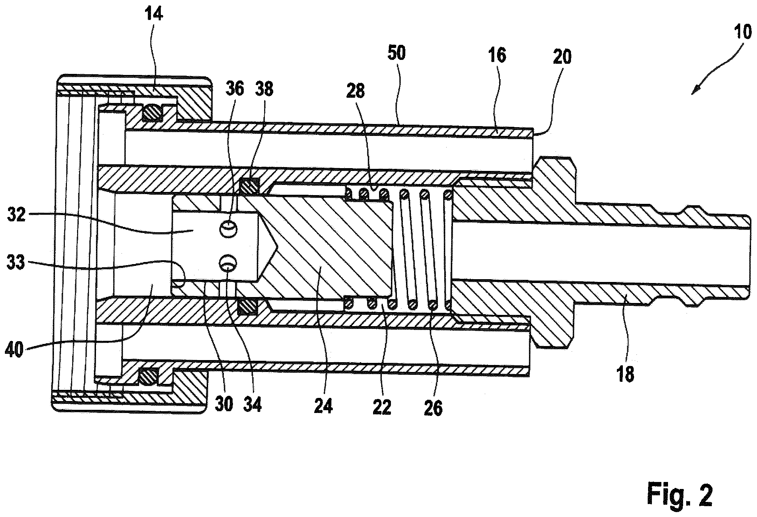

Anhand der Figuren soll die erfindungsgemäße Lehre beschrieben werden, die sich auf eine Kupplung zum Verbinden einer Druckluftquelle mit einem Druckluftmotor bzw. einen Druckluftmotor mit Kupplung bezieht. Die Ausführungsform der Fig. 1 und 2 ist von der Lehre des Anspruchs 1 nicht erfasst.

In einer ersten Ausführungsform gemäß der Fig. 1 und 2 ist eine Kupplung 10, die als Schnellkupplung bezeichnet werden kann, mit einem Abschnitt 12 eines Druckluftmotors über eine Überwurfmutter 14 verbunden, wie selbsterklärend der Fig. 1 zu entnehmen ist. Die Kupplung 10 weist ein Gehäuse 16 mit einem mit diesem verbindbaren zapfenförmigen Anschluss 18 für ein allgemein als Schlauch bezeichnetes Verbindungselement auf, das zu einer Druckluftquelle führt, um den Druckluftmotor mit Druckluft zu versorgen. Der Anschluss 18 geht mittig vom stirnseitigen Bereich 20 des Gehäuses 16 aus, der auch in Bezug auf den Druckluftmotor als distaler Bereich bezeichnet werden kann.

Der Anschluss 18 mündet in einem als Gehäusekanal zu bezeichnenden Innenraum 22 des Gehäuses 16, in dem in Längsachsenrichtung des Gehäuses 16 ein Kolben 24 verstellbar ist, der in Richtung proximalen Bereichs des Gehäuses 16, also des Bereichs des Anschlusses mit dem Druckluftmotor, mittels einer Feder, wie Schraubenfeder 26, kraftbeaufschlag ist.

Der Kolben 24 verläuft mit einem druckanschlussseitigen Abschnitt beabstandet zur Innenwandung 28 des Innenraums 22, so dass ein Ringraum 30 vorliegt, in dem die Druckluft ansteht bzw. durch den die Druckluft strömen kann. Der sich anschließende Abschnitt des Kolbens 24, der druckluftmotoranschlussseitig verläuft, wird im Gehäuse 16 axial geführt, wie gleichfalls selbsterklärend aus den Fig. erkennbar ist.

Der Kolben 24 weist in seinem dem Druckluftmotor naheliegenden Bereich 30 eine zentrale Ausnehmung, wie Bohrung 32, auf, die auch als Kolbenkanal zu bezeichnen ist, von der radial sich erstreckende Öffnungen 34, 36 ausgehen, die den Kolben 24 peripher durchsetzen, wie sich gleichfalls aus der zeichnerischen Darstellung selbsterklärend ergibt.

Der Kolben 24 ist gegenüber der Innenwandung 28 über zumindest eine umlaufende Dichtung 38 abgedichtet, die in Abhängigkeit von der Stellung des Kolbens 24 entweder eine Verbindung zwischen den Öffnungen 34, 36 und dem Ringraum 30 absperrt (Fig. 2) oder freigibt (Fig. 1). Letzteres ist dann der Fall, wenn die Kupplung 10 mittels der Überwurfmutter 14 mit dem Druckluftmotor 12 verbunden ist und der Kolben 24 entgegen der Federkraft und auf diesen einwirkender Druckluft in Richtung distalen Bereichs, also den Stirnbereich 20, des Gehäuses 16 verstellt ist. Dies wird dadurch ermöglicht, dass von dem Druckluftmotor 12 ein Druckelement, wie Zapfenelement oder Zapfen 40, ausgeht, das sich derart in dem bzw. durch den Anschluss 15 des Druckluftmotors 12, auf den die Überwurfmutter 14 geschraubt wird, erstreckt, dass bei mit dem Druckluftmotor 12 verbundener Kupplung 10 das Druckelement bzw. der Zapfen 40 mit dem motorseitigen Stirnbereich 33 des Kolbens 24 derart wechselwirkt, dass dieser in Richtung distalen Bereichs des Gehäuses 16 verstellt wird, also entsprechend die Feder 26 zusammengedrückt wird, wie sich aus der Fig. 1 ergibt. In dieser zweiten Stellung sind die Öffnungen 34, 36 mit dem Ringraum 30 verbunden, so dass Druckluft über die Öffnungen 34, 36 und 41 die Bohrung 32 in dem Kolben 24 und eine in diese übergehende axial verlaufende Aussparung wie Bohrung in dem Druckelement 40 strömen kann, die mit dem Druckluftmotor zu dessen Betätigung verbunden ist. Die Bohrung 41 kann auch als Verbindungskanal bezeichnet werden.

Anstelle des Zapfens 40 kann auch eine andere konstruktive Lösung vorgesehen sein, um bei mit dem Druckluftmotor verbundener Schnellkupplung 10 den Kolben 24 zu verstellen. Insoweit ist Druckelement bzw. Zapfen 40 für entsprechende Lösungsmöglichkeiten als Synonym zu verstehen.

Wird die Kupplung 10 demontiert, also in der zeichnerischen Darstellung der Fig. 1 nach rechts bewegt, so wird aufgrund der auf den Kolben 24 einwirkenden Kraft dieser in dem Gehäuse 16 derart verschoben, dass sich die Öffnungen 34, 36 zwischen proximalen Bereich des Gehäuses 16 und der Dichtung 38 befinden, in der sogenannten ersten Stellung, so dass die Verbindung zu dem Ringraum 30 unterbunden ist und somit Druckluft nicht mehr durch die Bohrung 32 in Richtung des Druckluftmotors 12 strömen kann.

Aus den zeichnerischen Darstellungen ergibt sich des Weiteren, dass innerhalb des Gehäuses 16, und zwar im Ausführungsbeispiel zwei Kanäle oder Bohrungen 42, 44 in Längsrichtung des Gehäuses 16 verlaufend vorgesehen sind, die mit Abluftbohrungen 46, 48 des Druckluftmotors 12 bei mit diesem verbundener Kupplung 10 verbunden sind bzw. in diese übergehen. Die Kanäle 42, 44 durchsetzen den Stirnflächenbereich des Gehäuses 16, so dass dann, wenn die Umfangswandung 50 des Gehäuses 16 von einem Schlauch umgeben ist, die Abluft abgeführt werden kann. Dabei umgibt der entsprechende Schlauch zunächst koaxial den mit der Druckluftquelle verbundenen und von dem Zapfenabschnitt 18 ausgehenden Schlauch. Der die Abluft führende Schlauch kann mit einem Schalldämpfer verbunden werden, um den Geräuschpegel zu reduzieren.

Die Kupplung 10 besteht vorzugsweise aus nichtrostendem Material wie Stahl, so dass auch insoweit Hygieneanforderungen entsprochen werden kann.

Eine weitere Dichtung befindet sich zwischen der Überwurfmutter 14 und dem Gehäuse 16 der Kupplung 10. Auch verläuft eine Abdichtung zwischen dem Druckelement 40 und der Innenwandung 28 des Gehäuses 16.

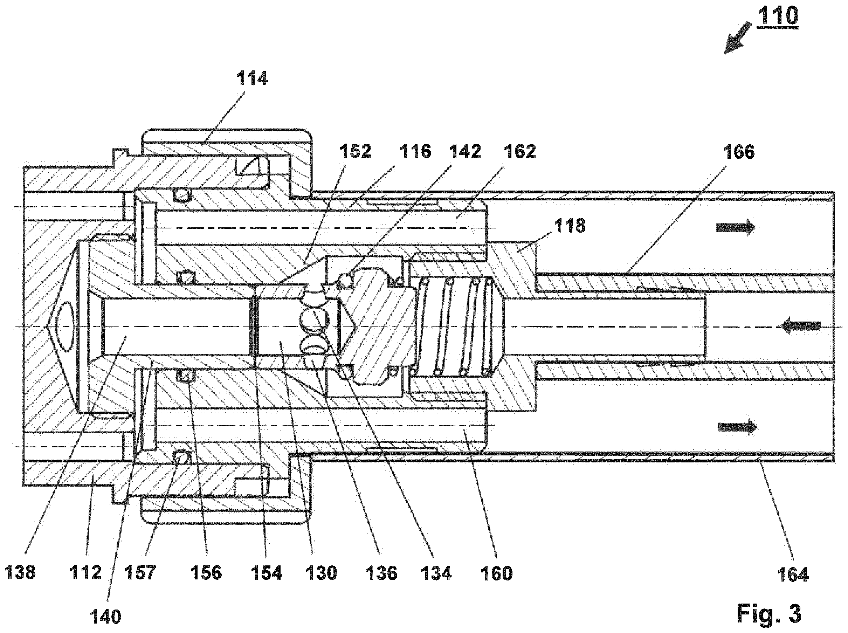

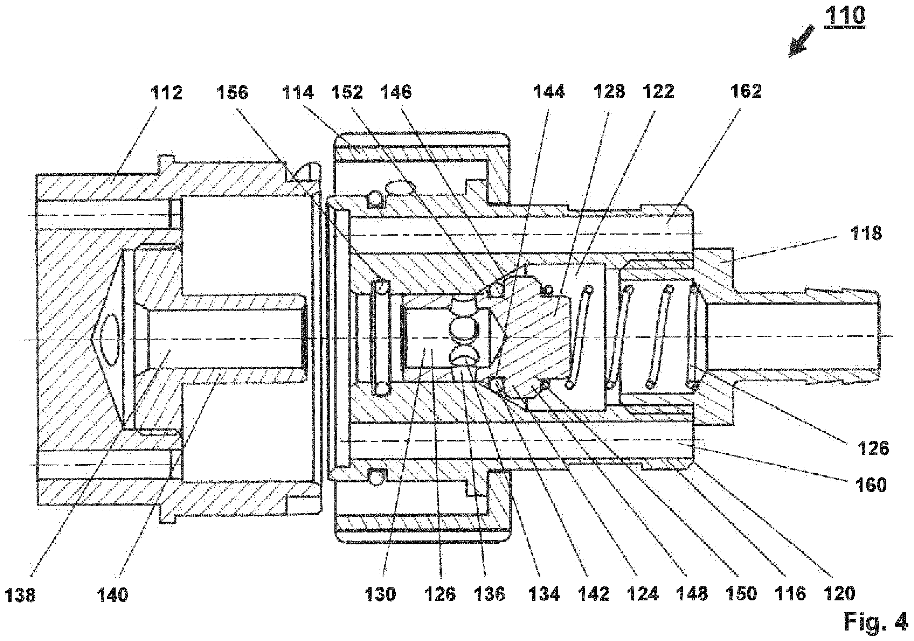

Den Fig. 3 und 4 ist eine der Erfindung entsprechende Ausführungsform einer Kupplung 110 zu entnehmen, die insbesondere für einen Druckluftmotor im Bereich der Lebensmittelindustrie eingesetzt werden kann, ohne dass hierdurch eine Einschränkung der erfindungsgemäßen Lehre erfolgen soll. Unabhängig hiervon ist die Kupplung 110 - wie die Kupplung 10 - nicht ortsgebunden, so dass problemlos eine Verbindung zu Druckluftmotoren erfolgen kann, die z.B. von Hand betätigt werden. Dabei erfolgt - wie bei dem Ausfiihrungsbeispiel der Fig. 1 und 2 - eine unmittelbare Verbindung der Kupplung mit einem Druckluftmotor bzw. einem Abschnitt 112 des Druckluftmotors.

Zum Verbinden des Abschnitts 112 ist eine Überwurfmutter 114 vorgesehen, die den Abschnitt 112 aufnimmt und von der Kupplung 100 ausgeht, wie die zeichnerischen Darstellungen verdeutlichen.

Mit dem Gehäuse 116 der Kupplung 110 ist ein Druckluftanschluss 118 verbindbar, der insbesondere die Stirnseite 120 des Gehäuses 116 durchsetzt und in dieses einschraubbar ist. In diesem Bereich ist das Gehäuse 116 derart ausgebildet, dass sich ein als Gehäusekanal 122 zu bezeichnender Innenraum ergibt, über den in nahestehender Weise über den Anschluss 118 Druckluft durch die Kupplung 110 hindurch zu dem Druckluftmotor strömen kann.

Innerhalb des Gehäusekanals 122 und in axialer Richtung ist ein Kolben 124 verstellbar, der mittels eines vorzugsweise als Schraubenfeder ausgebildeten Federelements 126 zum proximalen Bereich der Kupplung 110 hin kraftbeaufschlagt wird, also in Richtung des Bereichs, in dem der Druckluftmotor bzw. der Abschnitt 112 mit der Kupplung 110 verbunden ist. Der gegenüberliegende Stirnbereich 120 ist als distaler Bereich der Kupplung 110 zu bezeichnen.

Der Kolben 124 besteht aus einem ersten Abschnitt 126 zylinderförmiger Geometrie und einem zweiten Abschnitt 128, der im Längsschnitt eine T-Geometrie aufweist. Im ersten Abschnitt 126 verläuft eine zentrale Bohrung, die als Kolbenkanal 130 zu bezeichnen ist, die in ihrem Bodenbereich in radial sich erstreckende Öffnungen 134, 136 übergeht, die die Kolbenwandung durchsetzt, um in Abhängigkeit von der Stellung des Kolbens 124 entweder Druckluft über den Anschluss 118, den Gehäusekanal 122 und den Kolbenkanal 130 zu einem in dem Abschnitt 112 zum Betätigen des Druckluftmotors verlaufenden Verbindungskanal 138 strömen zu lassen, der innerhalb eines Hohlzapfens - auch Zapfenelement 140 genannt - verläuft, oder die Druckluft abzusperren (Fig. 4), wenn die Kupplung 110 von dem Druckluftmotor getrennt wird. Hierzu ist eine erste Dichtung 142 vorgesehen, die im Übergangsbereich zwischen dem ersten Abschnitt 126 und dem zweiten Abschnitt 128 des Kolbens 124 verläuft, und zwar in einer Nut 144.

Dabei liegt die erste Dichtung 142 an der proximalen Außenfläche 146 des Querschenkels 148 des zweiten Abschnitts 128 des Kolbens 124 an. An der gegenüberliegenden distalen Außenfläche 150 des Querschenkels 146 stützt sich die Feder 126 mit einem Ende ab. Das gegenüberliegende Ende stützt sich an der Innenseite des in das Gehäuse 116 einschraubbaren Druckluftanschlusses 118 ab.

Der ersten Dichtung 142 ist eine Anlagefläche 152 in der Innenwandung des Gehäuses 116 der Kupplung 110 zugeordnet, an der die erste Dichtung 142 dann anliegt, wenn der Druckluftdurchfluss abgesperrt werden soll, also der Druckluftmotor von der Kupplung 110 getrennt ist. In diesem Fall beaufschlagt die Feder 126 den Kolben 124 derart, dass dieser in Richtung des druckluftmotoranschlussseitigen Bereichs in einem Umfang verstellt wird, dass die erste Dichtung 142 dichtend an der Anlagefläche 152 anliegt. Da sich die radial verlaufenden Öffnungen 134, 136 des Kolbens 124 beim Anliegen der ersten Dichtung 142 an der Anlagefläche 152 zwischen proximalem Bereich des Gehäuses 116, also der druckluftmotorseitig verlaufenden Stirnfläche, und der Anlagefläche 142 befinden, kann Druckluft nicht über die Öffnungen 134, 136 strömen.

Ist entsprechend der Fig. 3 die Kupplung 110 mit dem Abschnitt 112 des Druckluftmotors verbunden, so wirkt der Zapfen 140 mit seiner Stirnfläche auf die zugewandte Stirnfläche des ersten Abschnitts 126 des Kolbens 124 mit der Folge ein, dass bei einem axialen Verstellen des Kolbens 124 - durch Drehen der Überwurfmutter 114 - in Richtung des Druckluftanschluss 118 die von der Feder 126 hervorgerufene Kraft überwunden wird und somit die erste Dichtung 142 von der Anlagefläche 152 beabstandet wird. Gleichzeitig gelangen die radial verlaufenden Öffnungen 134, 136 in den Bereich des Gehäusekanals 122, in dem die Anlagefläche 142, die eine Kegelgeometrie aufweist, verläuft mit der Folge, dass Druckluft über den Gehäusekanal 130 und die Öffnungen 134, 136 in den Verbindungskanal 138 und somit zum Druckluftmotor strömen kann. Der Verbindungskanal 138 verläuft in dem auch als Hülse zu bezeichnenden Zapfen 140. Die Stoßfläche zwischen dem Zapfen 140 und dem ersten Abschnitt 126 des Kolbens 124 ist in Fig. 3 mit dem Bezugszeichen 154 gekennzeichnet.

In der Innenwandung des Gehäuses 116 ist eine zweite Dichtung 156 eingelassen, über die das Gehäuse 116 gegenüber dem Zapfen 140 abgedichtet wird, und zwar solange, bis die erste Dichtung 142 dichtend an der Anlagefläche 152 anliegt. Entsprechend ist der Abstand zwischen der zweiten Dichtung 156 und der Anlagefläche 152 in Bezug auf die Länge des Kolbens 124 und somit der Stoßfläche 154 in Bezug auf den Abstand zwischen der ersten Dichtung 142 und der Stoßfläche 154 abgestimmt.

Eine dritte Dichtung 157 dichtet den Abschnitt 122 gegenüber dem Gehäuse 116 ab, die bevorzugt in der Gehäusewandung eingelassen ist.

Wie bei dem Ausführungsbeispiel in den Fig. 1 und 2 verlaufen innerhalb der Gehäusewandung Abluftkanäle 160, 162, über die von dem Druckluftmotor rückgeführte Luft strömen kann. Die Abluft wird von einem Schlauchelement 164 weggeführt, das das Gehäuse 116 umgibt. Innerhalb des entsprechenden Schlauchs 164 verläuft ein mit dem Druckluftanschluss 118 verbundener Schlauch 166.

Somit stehen Kupplungen 10, 110 zur Verfügung, die eine Druckluftzuführung und eine Abluftführung ermöglichen. Der Geräuschpegel bei der Nutzung des Druckluftmotors wird gleichzeitig reduziert, insbesondere wenn die Abluft über einen z.B. 3 Meter langen Schlauch weggeführt wird und sodann einen Schalldämpfer durchsetzt.

Zur Geräuschreduzierung ist insbesondere vorgesehen, dass das erste Schlauchelement 164, also der Schlauch, über den die Abluft weggeführt wird, in einem Gehäuse mündet, das insbesondere aus Kunststoff besteht. Der die Druckluft führende Zuluftschlauch 166 wird insbesondere in der Mitte des Gehäuses hindurchgeführt und mit einem O-Ring abgedichtet. Die aus dem Abluftschlauch austretende Abluft kann über Schalldämpfer entweichen, die im oder am Gehäuse angebracht sind.

Die Erfindung bezieht sich auf eine Kupplung 10, 110 zum Verbinden einer Druckluftquelle mit einem Druckluftmotor, umfassend ein Gehäuse 16, 116 mit einem zu einem Druckluftanschluss 18, 118 führenden Gehäusekanal, einen axial in dem Gehäusekanal 22, 122 verstellbaren von einem Federelement 26, 126 kraftbeaufschlagten Kolben 24, 124 mit einem axial verlaufenden Kolbenkanal 30, 132, der bei mit dem Druckluftmotor verbundener Kupplung in einen in einem Zapfenelement 40, 140 des Druckluftmotors vorhandenen Verbindungskanal 41, 138 übergeht, wobei der Kolben entgegen der Kraftbeaufschlagung durch das Federelement in Richtung des Druckluftanschlusses mittels des Zapfenelements verstellbar ist, wobei bei fehlendem Wechselwirken zwischen dem Zapfenelement und dem Kolben sich der Kolben in einer ersten Stellung durch die Kraftbeaufschlagung durch das Federelement befindet, in der der Gehäusekanal gegenüber dem Kolbenkanal über eine zwischen dem Kolben und dem Gehäusekanal verlaufende erste Dichtung 38, 142 abgesperrt ist, und bei mit dem Druckluftmotor verbundener Kupplung in einer zweiten Stellung des Kolbens eine Druckluftverbindung zwischen dem Gehäusekanal, dem Kolbenkanal und dem Verbindungskanal besteht, wobei sich die Kupplung dadurch auszeichnet, dass das Federelement 26, 126 zwischen dem Druckluftanschluss 18, 118 und druckluftanschlussseitigem Bereich des Kolbens 24, 124 verläuft, dass von dem druckluftanschlussseitigen Bereich des Kolbenkanals 30, 132 radial verlaufende Öffnungen 34, 36, 134, 136 ausgehen, über die in der zweiten Stellung des Kolbens die Druckluft strömt, und dass in der Wandung des Gehäuses 16, 116 zumindest ein mit dem Druckluftmotor verbundener Abluftkanal 42, 44, 160, 162 verläuft, der die Wandung in ihrem druckluftanschlussseitigen Bereich, insbesondere Stirnfläche des Gehäuses, durchsetzt.

Insbesondere bezieht sich die Erfindung auf eine Kupplung 10, 110 zum Verbinden einer Druckluftquelle mit einem Druckluftmotor, umfassend ein Gehäuse 16, 116 mit einem zu einem Druckluftanschluss 18, 118 führenden Gehäusekanal, einen axial in dem Gehäusekanal 22, 122 verstellbaren von einem Federelement 26, 126 kraftbeaufschlagten Kolben 24, 124 mit einem axial verlaufenden Kolbenkanal 30, 132, der bei mit dem Druckluftmotor verbundener Kupplung in einen in einem Zapfenelement 40, 140 des Druckluftmotors vorhandenen Verbindungskanal 41, 138 übergeht, wobei der Kolben entgegen der Kraftbeaufschlagung durch das Federelement in Richtung des Druckluftanschlusses mittels des Zapfenelements verstellbar ist, wobei bei fehlendem Wechselwirken zwischen dem Zapfenelement und dem Kolben sich der Kolben in einer ersten Stellung durch die Kraftbeaufschlagung durch das Federelement befindet, in der der Gehäusekanal gegenüber dem Kolbenkanal über eine zwischen dem Kolben und dem Gehäusekanal verlaufende erste Dichtung 38, 142 abgesperrt ist, und bei mit dem Druckluftmotor verbundener Kupplung in einer zweiten Stellung des Kolbens eine Druckluftverbindung zwischen dem Gehäusekanal, dem Kolbenkanal und dem Verbindungskanal besteht, wobei sich die Kupplung dadurch auszeichnet, dass der Kolben 24, 124 einen druckluftmotorseitig verlaufenden ersten Abschnitt 126 und einen druckluftanschlussseitig verlaufenden zweiten Abschnitt 128 aufweist, dass der erste Abschnitt außenseitig eine Zylindergeometrie aufweist und innerhalb von diesem der Kolbenkanal 132 verläuft, dass der zweite Abschnitt im Vergleich zu dem ersten Abschnitt einen größeren Querschnitt aufweist und beabstandet zur Innenfläche des Gehäusekanals 122 verläuft, dass das Federelement 126 zum einen druckluftanschlusseitig, insbesondere an dem Druckluftanschluss 118, und zum anderen an dem ersten Abschnitt abgestützt ist, dass im zweiten Abschnitt oder im Übergangsbereich zwischen dem ersten und dem zweiten Abschnitt eine erste Dichtung 142 verläuft, dass der Gehäusekanal eine Anlagefläche 152 aufweist, dass die erste Dichtung bei fehlendem Wechselwirken zwischen dem Zapfenelement 140 und dem Kolben an der Anlagefläche anliegt, und dass der Kolbenkanal in seinem druckluftanschlussseitigen Bereich radial verlaufende Öffnungen 134, 136 aufweist, die derart in Bezug auf die Anlagefläche verlaufen, dass bei fehlendem Anliegen der Dichtung an der Anlagefläche eine Verbindung zwischen dem Gehäusekanal und dem Kolbenkanal besteht, und beim Anliegen der Dichtung an der Anlagefläche die Verbindung gesperrt ist.

Dabei sieht die Erfindung insbesondere vor, dass die Anlagefläche 152 eine Konusform aufweist.

Ferner ist vorgesehen, dass der erste Abschnitt 126 über eine Nut 144 in den zweiten Abschnitt 128 übergeht, in der die erste Dichtung 142 verläuft.

Auch zeichnet sich die Erfindung dadurch aus, dass der zweite Abschnitt 128 im Längsschnitt eine T-Form mit einem Querschenkel 148 aufweist, wobei das Federelement, wie Schraubenfeder, vorzugsweise zum einen an druckluftanschlussseitiger Seite 146 des Querschenkels und zum anderen an Innenfläche des mit dem Gehäuse 116 verbundenen Druckluftanschlusses 118 abgestützt ist.

Bevorzugter Weise ist vorgesehen, dass der Gehäusekanal 122 in seiner Innenseite eine parallel zu der ersten Dichtung 142 verlaufende umlaufende zweite Dichtung 156 aufweist, über die das Zapfenelement 140 gegenüber dem Gehäusekanal 122 abdichtbar ist, wobei Abstand zwischen Kontaktbereich der ersten Dichtung auf der Anlagefläche 152 zu der zweiten Dichtung derart festgelegt ist, dass beim Anliegen der ersten Dichtung an der Anlagefläche Stoßfläche 154 zwischen dem Kolben 124 und dem Zapfenelement zwischen der Anlagefläche und der zweiten Dichtung verläuft.

Die Erfindung ist auch dadurch gekennzeichnet, dass in der Wandung des Gehäuses 116 zumindest eine vom dem Druckluftmotor ausgehende Abluftverbindung 160, 162, wie Kanal oder Bohrung, verläuft, die druckluftanschlussseitigen Bereich der Wandung, insbesondere deren Stirnseite 120, durchsetzt.

Die Erfindung zeichnet sich des Weiteren dadurch aus, dass das Gehäuse 16, 116 mit einem ersten Schlauchelement 164 verbunden ist, in dem die zumindest eine Abluftverbindung mündet.

Insbesondere zeichnet sich die Erfindung dadurch aus, dass vom druckluftmotoranschlussfernliegenden Stirnbereich des Gehäuses 16, 116 der Druckluftanschluss 18, 118 ausgeht, der derart ausgebildet ist, dass mit diesem ein zweites Schlauchelement 166 verbindbar ist, dass bereichsweise von dem ersten Schlauchelement 164 umgeben ist.

Kennzeichnend für die Erfindung ist auch, dass das erste Schlauchelement 164 ausgebildet oder mit einer Einrichtung verbunden ist, um mit einem Schalldämpfer verbunden zu werden.

Bevorzugterweise ist vorgesehen, dass das erste Schlauchelement 164 eine Länge von zumindest 200 cm, vorzugsweise von zumindest 300 cm, aufweist.

Insbesondere mündet das erste Schlauchelement 164 in einem vorzugsweise aus Kunststoff bestehenden Gehäuse. In diesem tritt die Ablauft aus dem ersten Schlauchelement 164 aus und durchsetzt sodann Schalldämpfer, die am oder im Gehäuse angebracht sind. Hierdurch ergibt sich eine erhebliche Geräuschreduzierung.

Des Weiteren wird der die Druckluft zuführende Schlauch 166 durch das Gehäuse hindurchgeführt, und gegenüber diesem über z.B. einem O-Ring abgedichtet. Somit ist auf einfache Weise eine koaxiale Führung des Druckluftschlauchs 166 und des Abluftschlauchs 164 möglich.

Insbesondere sieht die Erfindung vor, dass die Kupplung 10, 110 nicht ortsfest angeordnet ist, vielmehr an einem gewünschten Ort mit einem Druckluftmotor verbindbar.

Auch zeichnet sich die Erfindung durch einen Druckluftmotor mit einer Kupplung aus, die durch zumindest einige der Merkmale gekennzeichnet ist, die zuvor beschrieben worden sind.

## Patentansprüche

1. Kupplung (110) zum Verbinden einer Druckluftquelle mit einem Druckluftmotor, umfassend ein Gehäuse (116) mit einem zu einem Druckluftanschluss (118) führenden Gehäusekanal, einen axial in dem Gehäusekanal (122) verstellbaren von einem Federelement (126) kraftbeaufschlagten Kolben (124) mit einem axial verlaufenden Kolbenkanal (132), wobei die Kupplung ausgebildet ist, um bei mit dem Druckluftmotor verbundener Kupplung in einen zu dem Druckluftmotor führenden Verbindungskanal (138) überzugehen, wobei der Kolben entgegen der Kraftbeaufschlagung durch das Federelement in Richtung des Druckluftanschlusses verstellbar ist, wobei bei fehlendem Wechselwirken zwischen einem Zapfenelement des Druckluftmotors und dem Kolben sich der Kolben in einer ersten Stellung durch die Kraftbeaufschlagung durch das Federelement befindet, in der der Gehäusekanal gegenüber dem Kolbenkanal über eine zwischen dem Kolben und dem Gehäusekanal verlaufende erste Dichtung (142) durch Anliegen der ersten Dichtung an einer Anlagefläche (152) in dem Gehäusekanal abgesperrt ist, und wobei die Kupplung des Weiteren derart ausgebildet ist, dass bei mit dem Druckluftmotor verbundener Kupplung in einer zweiten Stellung des Kolbens eine Druckluftverbindung zwischen dem Gehäusekanal, dem Kolbenkanal und dem Verbindungskanal besteht, wobei das Federelement (126) zwischen dem Druckluftanschluss (118) und druckluftanschlussseitigem Bereich des Kolbens (124) verläuft, wobei von dem druckluftanschlussseitigen Bereich des Kolbenkanals (132) radial verlaufende Öffnungen (134, 136) ausgehen, über die in der zweiten Stellung des Kolbens die Druckluft strömt, und wobei in der Wandung des Gehäuses (116) zumindest ein Abluftkanal (160, 162) verläuft, der die Wandung in ihrem druckluftanschlussseitigen Bereich durchsetzt, wobei die Kupplung derart ausgebildet ist, dass der Abluftkanal mit dem Druckluftmotor verbindbar ist,
wobei der Kolben (124) mittels des den Verbindungskanal (138) aufweisenden Zapfenelements (140) des Druckluftmotors verstellbar ist, dass der Gehäusekanal (122) in seiner Innenseite eine parallel zu der ersten Dichtung (142) verlaufende umlaufende zweite Dichtung (156) aufweist, über die das Zapfenelement (140) gegenüber dem Gehäusekanal (122) abdichtbar ist,
**dadurch gekennzeichnet, dass** ein Abstand zwischen einem Kontaktbereich der ersten Dichtung auf der Anlagefläche (152) zu der zweiten Dichtung derart festgelegt ist, dass beim Anliegen der ersten Dichtung an der Anlagefläche eine Stoßfläche (154) zwischen dem Kolben (124) und dem Zapfenelement zwischen der Anlagefläche und der zweiten Dichtung verläuft.

2. Kupplung nach Anspruch 1,
**dadurch gekennzeichnet,**
**dass** der Kolben (124) einen druckluftmotorseitig verlaufenden ersten Abschnitt (126) und einen druckluftanschlussseitig verlaufenden zweiten Abschnitt (128) aufweist,
**dass** der erste Abschnitt außenseitig eine Zylindergeometrie aufweist und innerhalb von diesem der Kolbenkanal (132) verläuft,
**dass** der zweite Abschnitt im Vergleich zu dem ersten Abschnitt einen größeren Querschnitt aufweist und beabstandet zur Innenfläche des Gehäusekanals (122) verläuft,
**dass** das Federelement (126) zum einen druckluftaschlussseitig und zum anderen an dem zweiten Abschnitt abgestützt ist,
**dass** im zweiten Abschnitt oder im Übergangsbereich zwischen dem ersten und dem zweiten Abschnitt die erste Dichtung (142) verläuft,
**dass** die erste Dichtung bei fehlendem Wechselwirken zwischen dem Zapfenelement (140) und dem Kolben an der Anlagefläche (152) anliegt,
und **dass** der Kolbenkanal in seinem druckluftanschlussseitigen Bereich radial verlaufende Öffnungen (134, 136) aufweist, die derart in Bezug auf die Anlagefläche verlaufen, dass bei fehlendem Anliegen der Dichtung an der Anlagefläche eine Verbindung zwischen dem Gehäusekanal und dem Kolbenkanal besteht, und beim Anliegen der Dichtung an der Anlagefläche die Verbindung gesperrt ist.

3. Kupplung nach Anspruch 1 oder 2,
**dadurch gekennzeichnet,**
**dass** der Abluftkanal (160, 162) Stirnfläche des Gehäuses (116) durchsetzt.

4. Kupplung nach Anspruch 2,
**dadurch gekennzeichnet,**
**dass** die Anlagefläche (152) eine Konusform aufweist.

5. Kupplung nach zumindest einem der Ansprüche 1 bis 4,
**dadurch gekennzeichnet,**
**dass** der erste Abschnitt (126) über eine Nut (144) in den zweiten Abschnitt (128) übergeht, in der die erste Dichtung (142) verläuft.

6. Kupplung nach zumindest einem der Ansprüche 2 bis 5,
**dadurch gekennzeichnet,**
**dass** der zweite Abschnitt (128) im Längsschnitt eine T-Form mit einem Querschenkel (148) aufweist, wobei das Federelement, wie Schraubenfeder, vorzugsweise zum einen an druckluftanschlussseitiger Seite (146) des Querschenkels und zum anderen an Innenfläche des mit dem Gehäuse (116) verbundenen Druckluftanschlusses (118) abgestützt ist.

7. Kupplung nach zumindest einem der vorhergehenden Ansprüche,
**dadurch gekennzeichnet,**
**dass** das Gehäuse (116) mit einem ersten Schlauchelement (164) verbunden ist, in dem die zumindest eine Abluftverbindung (160, 162) mündet.

8. Kupplung nach zumindest Anspruch 7,
**dadurch gekennzeichnet,**
**dass** vom druckluftmotoranschlussfernliegenden Stirnbereich des Gehäuses (116) der Druckluftanschluss (118) ausgeht, der derart ausgebildet ist, dass mit diesem ein zweites Schlauchelement (166) verbindbar ist, das bereichsweise von dem ersten Schlauchelement (164) umgeben ist.

9. Kupplung nach zumindest Anspruch 7,
**dadurch gekennzeichnet,**
**dass** das erste Schlauchelement (164) ausgebildet oder mit einer Einrichtung verbunden ist, um mit einem Schalldämpfer verbunden zu werden.

10. Kupplung nach zumindest Anspruch 7
**dadurch gekennzeichnet,**
**dass** das erste Schlauchelement (164) eine Länge von zumindest 200 cm, vorzugsweise von zumindest 300 cm, aufweist.

11. Kupplung nach zumindest Anspruch 7,
**dadurch gekennzeichnet,**
**dass** das erste Schlauchelement (164) in einem Gehäuse mündet, in dem oder an dem zumindest ein von der Abluft durchsetzter Schalldämpfer vorgesehen ist.

12. Kupplung nach zumindest Anspruch 8,
**dadurch gekennzeichnet,**
**dass** das zweite Schlauchelement (166) durch das Gehäuse hindurchgeführt und gegenüber diesem abgedichtet ist.

## Claims

1. A coupling (110) for connecting a compressed air source to an air motor, comprising a housing (116) with a housing channel leading to a compressed air connection (118), a piston (124) axially adjustable in the housing channel (122) and force-loaded by a spring element (126), having an axially extending piston channel (132), wherein the coupling is designed to merge into a connecting channel (138) when the coupling is connected to the air motor, wherein the piston is adjustable in the direction of the compressed air connection against the application of force by the spring element, wherein, in the absence of interaction between a pin element of the air motor and the piston, the piston is in a first position due to the application of force by the spring element in which the housing channel is shut off with respect to the piston channel by means of a first seal (142) extending between the piston and the housing channel, and wherein the coupling is further designed such, that, when the coupling is connected to the air motor, in a second position of the piston there is a compressed air connection between the housing channel, the piston channel and the connecting channel, wherein the spring element (126) runs between the compressed air connection (118) and the compressed air connection side area of the piston (124),
wherein radially extending openings (134, 136), through which the compressed air flows in the second position of the piston, extend from the compressed air connection side area of the piston channel (132),
and wherein at least one exhaust air channel (160, 162) runs in the wall of the housing (116) and passes through the wall in its compressed air connection side area, wherein the coupling is designed in such a way, that the exhaust air channel is connectable with the air motor, wherein the piston (124) is adjustable by means of the pin element (140) of the air motor having the connecting channel (138), in that the housing channel (122) has on its inside a circumferential second seal (156) which runs parallel to the first seal (142) by means of which the pin element (140) can be sealed with respect to the housing channel (122),
**characterized in that**
a distance between the contact region of the first seal on the contact surface (152) and the second seal being defined such that, when the first seal bears against the contact surface, an impact surface (154) between the piston (124) and the pin element runs between the contact surface and the second seal.

2. The coupling according to claim 1,
**characterized in that**
the piston (124) has a first section (126) extending on the air motor side and a second section (128) extending on the compressed air connection side,
**in that** the first section has a cylinder geometry on the outside and the piston channel (132) runs inside it,
**in that** the second section has a larger cross section compared to the first section and is spaced apart from the inner surface of the housing channel (122),
**in that** the spring element (126) is supported on the one hand on the compressed air connection side and on the other hand on the second section,
**in that** a first seal (142) runs in the second section or in the transition region between the first and second sections,
**in that** the first seal engages with the contact surface in the absence of interaction between the pin element (140) and the piston,
and **in that** the piston channel has, in its compressed air connection side area, radially extending openings (134, 136) which run with respect to the contact surface in such a way that, when the seal is not engaged with the contact surface, there is a connection between the housing channel and the piston channel, and when the seal is engaged with the contact surface, the connection is blocked.

3. The coupling according to claim 1 or 2,
**characterized in that**
the exhaust air channel (160, 162) penetrates the end face of the housing (116).

4. The coupling according to claim 2,
**characterized in that**
the contact surface (152) has a cone shape.

5. The coupling according to at least one of claims 1 to 4,
**characterized in that**
**in that** the first section (126) merges into the second section (128) via a groove (144) in which the first seal (142) runs.

6. The coupling according to at least one of claims 2 to 5,
**characterized in that**
the second section (128) has a T-shape in longitudinal section with a transverse leg (148), wherein the spring element, such as a helical spring, is preferably supported, on the one hand, on the compressed air connection side face (146) of the transverse leg and, on the other hand, on the inner surface of the compressed air connection (118) connected to the housing (116).

7. The coupling according to at least one of the preceding claims,
**characterized in that**
the housing (116) is connected to a first hose element (164) into which the at least one exhaust air connection (160, 162) opens.

8. The coupling according to at least claim 7,
**characterized in that**
the compressed air connection (118) starts from the end region of the housing (116) remote from the compressed air motor connection, which connection is designed in such a way that a second hose element (166) can be connected to it, which is surrounded in regions by the first hose element (164).

9. The coupling according to at least claim 7,
**characterized in that**
the first hose element (164) is formed or connected to a device to be connected to a muffler.

10. The coupling according to at least claim 7,
**characterized in that**
the first hose element (164) has a length of at least 200 cm, preferably of at least 300 cm.

11. The coupling according to at least claim 7,
**characterized in that**
the first hose element (164) leads to a housing in which or on which at least one muffler through which the exhaust air passes is provided.

12. The coupling according to at least claim 8,
**characterized in that**
the second hose element (166) is passed through the housing and sealed with respect thereto.

## Revendications

1. Accouplement (110) pour relier une source d'air comprimé à un moteur pneumatique, comprenant un boîtier (116) avec un conduit de boîtier menant à un raccord d'air comprimé (118), un piston (124) soumis à une force par un élément à ressort (126), déplaçable axialement dans le conduit de boîtier (122), avec un conduit de piston (132) s'étendant axialement, sachant que l'accouplement est conçu pour se prolonger dans un conduit de liaison (138) menant au moteur pneumatique, quand l'accouplement est relié au moteur pneumatique, sachant que le piston est déplaçable en direction du raccord d'air comprimé, à l'encontre de la force exercée par l'élément à ressort, sachant qu'en cas de manque d'interaction entre un tenon du moteur pneumatique et le piston, le piston se trouve dans un première position par la force exercée par l'élément à ressort, dans laquelle le conduit de boîtier est isolé du conduit de piston par le biais d'un premier joint (142) s'étendant entre le piston et le conduit de boîtier par appui du premier joint sur une surface d'appui (152) dans le conduit de boîtier, et sachant que l'accouplement est conçu, de plus, de sorte qu'il existe une connexion pneumatique entre le conduit de boîtier, le conduit de piston et le conduit de liaison quand l'accouplement est relié au moteur pneumatique dans un seconde position du piston, sachant que l'élément à ressort (126) s'étend entre le raccord d'air comprimé (118) et la zone côté raccord d'air comprimé du piston (124), sachant que des orifices (134, 136) s'étendant radialement partent de la zone côté raccord d'air comprimé du conduit de piston (132), par le biais desquels l'air comprimé s'écoule dans la seconde position du piston, et sachant que dans la paroi du boîtier (116) s'étend au moins un conduit d'air d'échappement (160, 162) qui traverse la paroi dans sa zone côté raccord d'air comprimé, sachant que l'accouplement est conçu de sorte que le conduit d'air comprimé est reliable au moteur pneumatique, sachant que le piston (124) est déplaçable au moyen du tenon (140) du moteur pneumatique, présentant le conduit de liaison (138), que le conduit de boîtier (122) présente dans sa face intérieure un second joint (156) circonférentiel, s'étendant parallèlement au premier joint (142) par le biais duquel second joint le tenon (140) peut être étanché par rapport au conduit de boîtier (122),
**caractérisé en ce**
**qu'**un écart entre une zone de contact du premier joint sur la surface d'appui (152) par rapport au second joint est défini de telle sorte qu'une surface d'impact (154) entre le piston (124) et le tenon s'étend entre la surface d'appui et le second joint lorsque le premier joint repose sur la surface d'appui.

2. Accouplement selon la revendication 1,
**caractérisé en ce**
**que** le piston (124) présente une première partie (126) s'étendant côté moteur pneumatique et une seconde partie (128) s'étendant côté raccord d'air comprimé,
**que** la première partie présente une géométrie cylindrique côté extérieur et que le conduit de piston (132) s'étend à l'intérieur de cette partie,
**que** la seconde partie présente une section supérieure à celle de la première partie et s'étend éloignée de la surface intérieure du conduit de boîtier (122),
**que** l'élément à ressort (126) est appuyé d'une part côté raccord d'air comprimé et d'autre part, sur la seconde partie.
**que** le premier joint (142) s'étend dans la seconde partie ou dans la zone de transition entre la première et la seconde partie,
**que** le premier joint repose sur la surface d'appui (152) en cas de manque d'interaction entre le tenon (140) et le piston,
et **que** le conduit de piston présente des orifices (134, 136) s'étendant radialement dans sa zone côté raccord d'air comprimé, qui s'étendent par rapport à la surface d'appui de telle sorte qu'il existe une connexion entre le conduit de boîtier et le conduit de piston si le joint ne repose pas sur la surface d'appui, et que la connexion est bloquée quand le joint repose sur la surface d'appui.

3. Accouplement selon la revendication 1 ou 2,
**caractérisé en ce**
**que** le conduit d'air d'échappement (160, 162) traverse le côté frontal du boîtier (116).

4. Accouplement selon la revendication 2,
**caractérisé en ce**
**que** la surface d'appui (152) présente une forme conique.

5. Accouplement selon au moins l'une des revendications 1 à 4,
**caractérisé en ce**
**que** la première partie (126) se prolonge dans la seconde partie (128) via une rainure (144) dans laquelle s'étend le premier joint (142).

6. Accouplement selon au moins l'une des revendications 2 à 5,
**caractérisé en ce**
**que** la seconde partie (128) en coupe longitudinale présente une forme en T avec une branche transversale (148), sachant que l'élément à ressort, tel qu'un ressort hélicoïdal, est appuyé de préférence, d'une part, sur la face (146) de la branche transversale, côté raccord d'air comprimé et d'autre part, sur la surface intérieure du raccord d'air comprimé (118) relié au boîtier (116).

7. Accouplement selon au moins l'une des revendications précédentes,
**caractérisé en ce**
**que** le boîtier (116) est relié à un premier élément tubulaire (164) dans lequel débouche au moins une connexion d'air d'échappement (160, 162).

8. Accouplement selon au moins la revendication 7,
**caractérisé en ce**
**que** le raccord d'air comprimé (118) part du côté frontal du boîtier (116) éloigné du raccord du moteur pneumatique, lequel raccord est conçu de sorte qu'est reliable à celui-ci un second élément tubulaire (166) qui est entouré partiellement par le premier élément tubulaire (164).

9. Accouplement selon au moins la revendication 7,
**caractérisé en ce**
**que** le premier élément tubulaire (164) est conçu ou relié à un équipement pour être relié à un silencieux.

10. Accouplement selon au moins la revendication 7
**caractérisé en ce**
**que** le premier élément tubulaire (164) présente une longueur d'au moins 200 cm, de préférence d'au moins 300 cm.

11. Accouplement selon au moins la revendication 7,
**caractérisé en ce**
**que** le premier élément tubulaire (164) débouche dans un boîtier dans lequel ou sur lequel est prévu au moins un silencieux traversé par l'air d'échappement.

12. Accouplement selon au moins la revendication 8,
**caractérisé en ce**
**que** le second élément tubulaire (166) est conduit à travers le boîtier et est étanché par rapport à celui-ci.
